# EUROPEAN PATENT SPECIFICATION

(11) **EP 2 324 221 B1**
(45) Date of publication and mention of the grant of the patent: **09.08.2017**
(21) Application number: 09762748.3
(22) Date of filing: 03.06.2009
(51) Int. Cl.: F02M 26/05

(54) **COOLING ARRANGEMENT FOR A SUPERCHARGED COMBUSTION ENGINE**
KÜHLANORDNUNG FÜR EINEN AUFGELADENEN VERBRENNUNGSMOTOR
DISPOSITIF DE REFROIDISSEMENT POUR UN MOTEUR A COMBUSTION SURALIMENTE

(30) Priority: 13.06.2008 SE 0801386
(43) Date of publication of application: 25.05.2011
(73) Proprietor: Scania CV AB, 151 87 Södertälje (SE)
(72) Inventor: KARDOS, Zoltan, S-151 35 Södertälje (SE); SÖDERBERG, Erik, S-111 29 Stockholm (SE)
(74) Representative: Scania CV AB
(86) International application number: PCT/SE2009/050662
(87) International publication number: WO 2009/151379

(56) References cited:
- EP-A1- 1 170 498
- WO-A1-2005/073535
- WO-A1-2007/108761
- WO-A1-2008/069743
- FR-A1- 2 829 533
- GB-A- 2 429 763
- US-A- 4 391 235
- US-A- 5 598 705
- US-B1- 6 230 668

## Description

### BACKGROUND TO THE INVENTION, AND STATE OF THE ART

The present invention relates to an arrangement for a supercharged combustion engine according to the preamble of claim 1.

The amount of air which can be supplied to a supercharged combustion engine depends on the pressure of the air but also on the temperature of the air. Supplying the largest possible amount of air to the combustion engine entails effective cooling of the air before it is led to the combustion engine. The compressed air may be subjected to a first step of cooling in a charge air cooler which is cooled by coolant from the combustion engine's cooling system, and to a second step of cooling in a charge air cooler which is cooled by coolant from a cooling system in which the coolant is at a significantly lower temperature than in the combustion engine's cooling system. Such a low-temperature cooling system makes it possible for the compressed air to be cooled to a temperature close to the temperature of the surroundings. In cold weather conditions, the compressed air is subjected to the second step of cooling to a temperature which may be below the dew point temperature of the air, resulting in precipitation of water vapour in liquid form in the charge air cooler. When the temperature of the surrounding air is below 0°C, there is also risk that the precipitated water may freeze to ice within the charge air cooler. Such ice formation will cause a greater or lesser amount of obstruction of the air flow ducts within the charge air cooler, resulting in a reduced flow of air to the combustion engine and consequent operational malfunctions or stoppages.

The technique known as EGR (Exhaust Gas Recirculation) is a known way of recirculating part of the exhaust gases from a combustion process in a combustion engine. The recirculating exhaust gases are mixed with the inlet air to the combustion engine before the mixture is led to the cylinders of the combustion engine. Adding exhaust gases to the air causes a lower combustion temperature, resulting inter alia in a reduced content of nitrogen oxides NOₓ in the exhaust gases. This technique is used both for Otto engines and for diesel engines. Supplying a large amount of exhaust gases to the combustion engine entails effective cooling of the exhaust gases before they are led to the combustion engine. The exhaust gases may be subjected to a first step of cooling in an EGR cooler which is cooled by coolant from the combustion engine's cooling system, and to a second step of cooling in an EGR cooler which is cooled by coolant from a low-temperature cooling system. The exhaust gases can thus likewise be cooled to a temperature close to the temperature of the surroundings. Exhaust gases contain water vapour which condenses within the EGR cooler when the exhaust gases undergo the second step of cooling to a temperature below the dew point of the water vapour. When the temperature of the surrounding air is below 0°C, there is also risk that the condensate formed may freeze to ice within the second EGR cooler. Such ice formation would cause a greater or lesser amount of obstruction of the exhaust gas flow ducts within the EGR cooler. If the EGR cooler is obstructed and the recirculation of exhaust gases ceases or is reduced, the result will be an increased content of nitrogen oxides in the exhaust gases.

WO 2005/073535 shows a motor vehicle with a main cooling system cooling an engine and a secondary low temperature cooling circuit cooling recirculating exhaust gases in an exhaust gas cooler and compressed air in a charge air cooler. Shortly downstream of a pump in the secondary cooling circuit is a branch-off with one path leading via the exhaust gas cooler and a second path leading via the charge air cooler. The two coolant streams are then recombined and flow through a low temperature coolant radiator.

### SUMMARY OF THE INVENTION

The object of the present invention is to provide an arrangement whereby a gaseous medium which contains water vapour can be subjected to very good cooling in a radiator while at the same time the risk of the radiator being obstructed is prevented.

This object is achieved with the arrangement of the kind mentioned in the introduction which is characterised by the features indicated in the characterising part of claim 1. For it to be possible for the gaseous medium to be effectively cooled, it needs to be cooled by a coolant in a second cooling system which may be referred to as a low-temperature cooling system. When the coolant in the second cooling system is used, the gaseous medium is usually cooled to a temperature at which water in liquid form precipitates within the radiator. If the coolant is also colder than 0°C, there is obvious risk that the water may freeze to ice within the radiator. The lower the temperature of the coolant in the second cooling system, the greater this risk. According to the invention, the heat from the combustion engine's exhaust gases is used to make it possible to warm the coolant in the second cooling system when ice has formed or there is risk of ice formation in the radiator. During normal operation of the combustion engine, the valve means is placed in a closed position whereby exhaust gases are prevented from flowing through the heat exchanger. The result is no warming of the coolant in the second cooling system. When the valve is placed in an open position, warm exhaust gases flow through the heat exchanger. In this case the coolant in the second cooling system is warmed by the exhaust gases. Such warming is advantageous in situations where the coolant in the second cooling system is at such a low temperature that it risks cooling the gaseous medium to such an extent that ice forms within the radiator. If a person decides that the radiator risks or is on the point of freezing up, the valve means can be placed manually in the open position. When the risk of ice formation has ceased, the valve means can be placed back in the closed position. The gaseous medium can thus provide very good cooling in a radiator while at the same time ice formation in the radiator can be prevented.

According to a preferred embodiment of the invention, the arrangement comprises an exhaust loop connected to an exhaust line of the combustion engine, which exhaust loop comprises said heat exchanger and valve means. Such an exhaust loop may be U-shaped. It may therefore have a first connection to the exhaust line in order to receive exhaust gases, and a second connection to the exhaust line in order to feed back the exhaust gases received. The second connection is with advantage situated downstream of the first connection so that part of the exhaust gases in the exhaust line can be led in parallel through said exhaust loop and warm the coolant in the heat exchanger when there is risk of ice formation.

According to the invention, the arrangement comprises at least one sensor adapted to detecting a parameter which indicates whether the gaseous medium is cooled to such an extent that there is ice formation or risk of ice formation in the radiator, and a control unit adapted to receiving information from said component and deciding whether there is ice formation or risk of ice formation in the radiator and, if so, to placing the valve means in the open position. With such a configuration, the valve means may be placed automatically in the second position when there is risk of ice formation in the radiator. The control unit may be a computer unit with suitable software for the purpose. Said sensor may be a temperature sensor or a pressure sensor. A temperature sensor may detect the temperature of the coolant in the second cooling system. If the temperature of the coolant is over 0°C when it is led into the radiator, there is no risk of ice formation within the radiator. To completely prevent ice formation, the control unit may place the valve means in the second position as soon as the temperature of the coolant drops below 0°C. The arrangement may comprise at least one temperature sensor or pressure sensor adapted to detecting a parameter which is related to the gaseous medium's pressure or temperature close to the radiator. A sensor may detect the gaseous medium's pressure or temperature after it has passed through the radiator. If the pressure or temperature is below a limit value, the control unit may find that the flow passages in the radiator are on the point of becoming obstructed by ice. In such cases, the control unit places the valve means in the open position so that the coolant in the second cooling system is subjected to warming. The warmed coolant which flows through the radiator melts the ice which has formed within the radiator. When the ice has melted, the control unit receives from the sensor information which indicates that the pressure or temperature in the radiator has reverted to acceptable values. The control unit places the valve means in the closed position. In this case, a limited amount of ice formation is therefore allowed within the radiator. However, the result is very effective cooling of the gaseous medium in that coolant temperatures below 0°C are acceptable so long as the radiator does not begin to freeze up.

According to the invention, the second cooling system comprises a radiator element in which the circulating coolant is cooled by air at the temperature of the surroundings. The coolant can thus be cooled to a temperature close to the temperature of the surroundings. The heat exchanger is situated in the second cooling system at a location downstream of the radiator element and upstream of the radiator with respect to the intended direction of coolant flow in the second cooling system. The coolant in the second system can thus undergo warming substantially immediately before it is led into the radiator. In situations where the valve means is placed in the open position, any ice which has formed within the radiator can therefore be quickly melted away.

According to another preferred embodiment of the invention, the first cooling system is adapted to cooling the combustion engine. During normal operation, the cooling system which cools a combustion engine is usually at a temperature of 80-100°C. The coolant in the second cooling system is with advantage at a significantly lower temperature. The arrangement may comprise a further radiator in which the gaseous medium is intended to be subjected to a first step of cooling by the coolant in the first cooling system before the gaseous medium is led to the aforesaid radiator in which it is subjected to a second step of cooling by the coolant in the second cooling system. The gaseous medium may be compressed air which is led into an inlet line to the combustion engine. When air is compressed, it undergoes an amount of heating which is related to the degree of compression of the air. In supercharged combustion engines, the air is compressed to a high pressure. The air therefore needs effective cooling. For this reason, it is advantageous to cool the compressed air in more than one radiator and in a number of stages so that it can reach a desired low temperature before it is led to the combustion engine. Said gaseous medium may also be recirculating exhaust gases led in a return line to the combustion engine. The exhaust gases may be at a temperature of 500-600°C when they are led into the return line. It is therefore likewise advantageous to cool the recirculating exhaust gases in more than one radiator and in a number of stages so that they can reach a desired low temperature before they are led to the combustion engine.

### BRIEF DESCRIPTION OF THE DRAWING

A preferred embodiment of the invention is described below by way of example with reference to the attached drawing, in which:

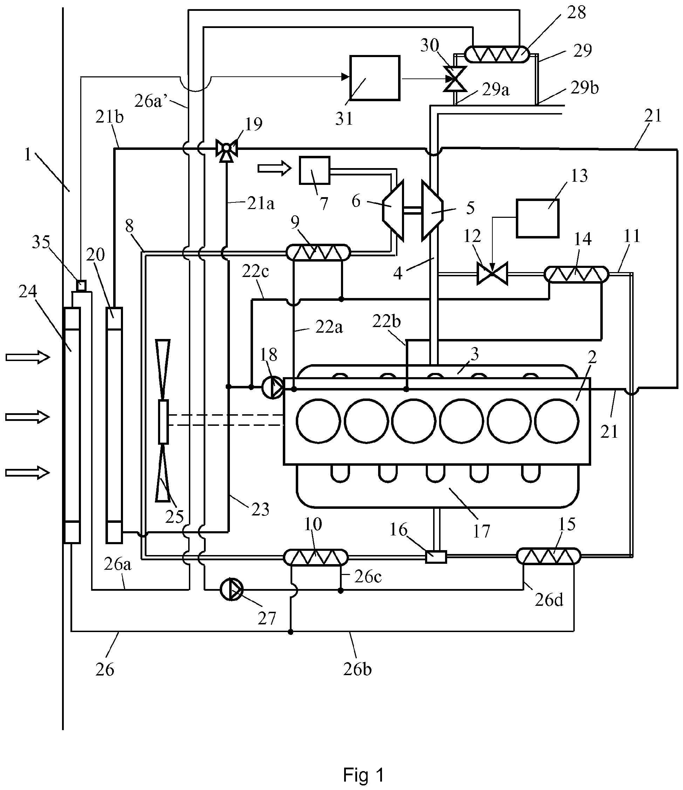

Fig. 1 depicts an arrangement for a supercharged combustion engine according to an embodiment of the invention.

### DETAILED DESCRIPTION OF A PREFERRED EMBODIMENT OF THE INVENTION

Fig. 1 depicts an arrangement for a supercharged combustion engine intended to power a schematically depicted vehicle 1. The combustion engine is here exemplified as a diesel engine 2. The diesel engine 2 may be used to power a heavy vehicle 1. The exhaust gases from the cylinders of the diesel engine 2 are led via an exhaust manifold 3 to an exhaust line 4. The diesel engine 2 is provided with a turbo unit which comprises a turbine 5 and a compressor 6. The exhaust gases in the exhaust line 4, which are at above atmospheric pressure, are led initially to the turbine 5. The turbine 5 is thus provided with driving power which is transferred, via a connection, to the compressor 6. The compressor 6 compresses air which is drawn into an air inlet line 8 via an air filter 7. The air in the inlet line 8 is cooled initially in a coolant-cooled first charge air cooler 9. The air is cooled in the first charge air cooler 9 by coolant from a first cooling system which also cools the combustion engine 2. The first cooling system is hereinafter referred to as the combustion engine's cooling system. The compressed air is thereafter cooled in a coolant-cooled second charge air cooler 10. The air is cooled in the second charge air cooler 10 by coolant from a second cooling system. The coolant in the second cooling system is at a significantly lower temperature than the coolant in the combustion engine's cooling system.

The arrangement comprises a return line 11 for effecting recirculation of part of the exhaust gases in the exhaust line 4. The return line 11 has an extent between the exhaust line 4 and the inlet line 8. The return line 11 comprises an EGR valve 12 by which the exhaust flow in the return line 11 can be shut off. The EGR valve 12 can also be used for steplessly controlling the amount of exhaust gases which is led from the exhaust line 4 to the inlet line 8 via the return line 11. A first control unit 13 is adapted to controlling the EGR valve 12 on the basis of information about the current operating state of the diesel engine 2. The return line 11 comprises a coolant-cooled first EGR cooler 14 for subjecting the exhaust gases to a first step of cooling. The exhaust gases are cooled in the first EGR cooler 14 by coolant from the combustion engine's cooling system. The exhaust gases undergo a second step of cooling in a coolant-cooled second EGR cooler 15. The exhaust gases are cooled in the second EGR cooler 15 by coolant from the second cooling system.

In certain operating situations in supercharged diesel engines 2, the pressure of the exhaust gases in the exhaust line 4 will be lower than the pressure of the compressed air in the inlet line 8. In such operating situations it is not possible to mix the exhaust gases in the return line 11 directly with the compressed air in the inlet line 8 without special auxiliary means. To this end it is possible to use, for example, a venturi 16 or a turbo unit with variable geometry. If instead the combustion engine 2 is a supercharged Otto engine, the exhaust gases in the return line 11 can be led directly into the inlet line 8, since the exhaust gases in the exhaust line 4 of an Otto engine in substantially all operating situations will be at a higher pressure than the compressed air in the inlet line 8. After the exhaust gases have mixed with the compressed air in the inlet line 8, the mixture is led to the respective cylinders of the diesel engine 2 via a manifold 17.

The combustion engine 2 is cooled in a conventional manner by a circulating coolant. The coolant in the combustion engine's cooling system is circulated by a coolant pump 18. The main flow of coolant is led through the combustion engine 2. After the coolant has cooled the combustion engine 2, it is led to a thermostat 19. The thermostat 19 leads a variable amount of the coolant to a line 21 a and a line 21 b depending on the temperature of the coolant. The line 21a leads coolant to the combustion engine 2, whereas the line 21b leads coolant to a radiator 20 fitted at a forward portion of the vehicle 1. When the coolant has reached a normal operating temperature, substantially all of the coolant is led to the radiator 20 in order to be cooled. A line 23 leads the cooled coolant back to the combustion engine 2. A smaller portion of the coolant in the cooling system is not used for cooling the combustion engine but is led into two parallel lines 22a, 22b. The line 22a leads coolant to the first charge air cooler 9, in which it subjects the compressed air to a first step of cooling. The line 22b leads coolant to the first EGR cooler 14, in which it subjects the recirculating exhaust gases to a first step of cooling. The coolant which has cooled the air in the first charge air cooler 9 and the coolant which has cooled the exhaust gases in the first EGR cooler 14 are reunited in a line 22c. The line 22c leads the coolant to a location in the cooling system which is situated between the three-way valve 19 and the pump 18, where it is mixed with cooled coolant from the radiator 20.

The second cooling system comprises a radiator element 24 fitted in front of the radiator 20 in a peripheral region of the vehicle 1. In this case the peripheral region is situated at a front portion of the vehicle 1. A radiator fan 25 is adapted to generating a flow of surrounding air through the radiator element 24 and the radiator 20. As the radiator element 24 is situated in front of the radiator 20, the coolant in the radiator element 24 is cooled by air at the temperature of the surroundings. The coolant in the radiator element 24 can thus be cooled to a temperature close to the temperature of the surroundings. The cold coolant from the radiator element 24 is circulated in the second cooling system in a line circuit 26 by a pump 27. The line circuit 26 comprises a first line 26a which leads cold coolant out from the radiator element 24 to the coolers 10, 15. The line circuit 26 comprises a second line 26b which leads the coolant back to the radiator element 24 after it has been used for cooling said coolers 10, 15.

The first line 26a comprises a line portion 26a' adapted to leading cold coolant to a heat exchanger 28. The heat exchanger 28 is arranged in an exhaust loop 29 which is connected to the exhaust line 4. The exhaust loop has a first connection 29a to the exhaust line 4 in order to receive exhaust gases, and a second connection 29b to the exhaust line 4 in order to feed back the exhaust gases received. The second connection 29b is situated downstream of the first connection 29a so that part of the exhaust gases in the exhaust line 4 can be led in parallel through the exhaust loop 29. The exhaust loop 29 comprises not only the heat exchanger 28 but also a valve 30. The valve 30 is controllable by a second control unit 31. After the coolant has passed through the heat exchanger 28, the warmed coolant is led back to the line portion 26a'. The line 26a comprises at a position downstream of the portion 26a' a line 26c and a line 26d. The line 26c is intended to lead cold coolant to the second charge air cooler 10, in which it subjects the compressed air to a second step of cooling, and the line 26d is intended to lead cold coolant to the second EGR cooler 15, in which it subjects the recirculating exhaust gases to a second step of cooling. After the coolant has passed through said coolers 10, 15, the warmed coolant is led back to the radiator 24 via the line 26b.

During operation of the diesel engine 2, exhaust gases flow through the exhaust line 4 and drive the turbine 5. The turbine 5 is thus provided with driving power which drives the compressor 6. The compressor 6 draws surrounding air in via the air filter 7 and compresses the air in the inlet line 8. The air thus acquires an increased pressure and an increased temperature. The compressed air is cooled in the first charge air cooler 9 by the radiator liquid in the combustion engine's cooling system. The radiator liquid may here be at a temperature of about 80-85°C. Thus the compressed air can undergo in the first charge air cooler 9 a first step of cooling to a temperature close to the temperature of the coolant. During normal operation, the control unit 31 is adapted to keeping the valve 30 in a closed position so that no exhaust gases from the exhaust line are led into the exhaust loop 29. The coolant thus undergoes no warming in the heat exchanger 28, and cold coolant is led to the line 26c. The coolant cools the compressed air in the second charge air cooler 10. The coolant may here be at a temperature close to the temperature of the surroundings. Thus the compressed air can in favourable circumstances be cooled to a temperature close to the temperature of the surroundings in the second charge air cooler 10.

In most operating states of the diesel engine 2, the first control unit 13 will keep the EGR valve 12 open so that part of the exhaust gases in the exhaust line 4 is led into the return line 11. The exhaust gases in the exhaust line 4 may be at a temperature of about 500-600°C when they reach the first EGR cooler 14. In the first EGR cooler 14, the recirculating exhaust gases are subjected to a first step of cooling by the coolant in the combustion engine's cooling system. The coolant in the combustion engine's cooling system will thus be at a relatively high temperature but definitely below the temperature of the exhaust gases. It is thus possible to effect good cooling of the exhaust gases in the first EGR cooler 14. When the valve 30 is in the closed position, cold coolant is led to the line 26d, in which the coolant cools the recirculating exhaust gases in the second EGR cooler 15. The coolant may thus here be at a temperature close to the temperature of the surroundings. In favourable circumstances, the recirculating exhaust gases can therefore likewise be cooled to a temperature close to the temperature of the surroundings in the second EGR cooler 15. Exhaust gases in the return line 11 can thus undergo cooling to substantially the same low temperature as the compressed air before they mix and are led to the combustion engine 2. A substantially optimum amount of air and recirculating exhaust gases can therefore be led into the combustion engine. Combustion in the combustion engine 2 with substantially optimum performance is thus made possible. The low temperature of the compressed air and the recirculating exhaust gases also results in a low combustion temperature and a low content of nitrogen oxides in the exhaust gases.

This effective cooling of the compressed air and the recirculating exhaust gases also has disadvantages. The compressed air is cooled in the second charge air cooler 10 to a temperature at which water in liquid form condenses in the charge air cooler 10. Similarly, the exhaust gases in the second EGR cooler 15 are cooled to a temperature at which condensate forms within the second EGR cooler 15. When the temperature of the surrounding air is below 0°C, there is also risk that the precipitated water in the second charge air cooler 10 and the precipitated condensate in the second EGR cooler 15 may freeze to ice. Ice formation within the second charge air cooler 10 and the second EGR cooler 15 might seriously disturb the operation of the combustion engine 2. The second control unit 31 is adapted to receiving information from at least one sensor which indicates whether ice has formed or there is risk of ice forming in the second charge air cooler 10 and/or the second EGR cooler 15. Such a sensor may be a temperature sensor 35 which detects the temperature of the coolant in the second cooling system. Fig. 1 depicts such a sensor 35 which detects the temperature of the coolant in the line 26a in the second cooling system. If the coolant in the line 26a is at a temperature which is definitely below 0°C, there is obvious risk that ice may form in the second charge air cooler 10 and/or in the second EGR cooler 15. The control unit 31 may alternatively receive information from two or more temperature sensors or pressure sensors. One such temperature sensor may measure the temperature of the compressed air after it has been cooled in the second charge air cooler 10, and another temperature sensor may measure the temperature of the recirculating exhaust gases after they have been cooled in the second EGR cooler 15. If the compressed air and/or the recirculating exhaust gases is/are at a temperature below 0°C, it means that ice is about to form within the charge air cooler 10 and/or within the second EGR cooler 15.

If it receives information which indicates that there is risk of ice formation or that ice has formed within either of the coolers 10, 15, the second control unit 31 places the valve 30 in an open position. Warm exhaust gases are thus led from the exhaust line 4 through the exhaust loop 29. The warm exhaust gases in the exhaust loop 29 warm the coolant which passes through the heat exchanger 28. The warm coolant is led on in the line 26a to the lines 26c and 26d whereby it flows through the second charge air cooler 10 and the second EGR cooler 15. The warm coolant quickly melts any ice which has formed within the charge air cooler 10 and/or the second EGR cooler 15. Any ice formation in the charge air cooler 10 and/or in the second EGR cooler 15 can thus be eliminated in a simple and effective manner. After the coolant has passed through the coolers 10, 15, it is led to the line 26b and back to the radiator element 24. After a predetermined time or when the second control unit 31 receives information which indicates that the ice has melted in the charge air cooler 10 and/or the second EGR cooler 15, the second control unit 31 places the valve 30 back in a closed position. The exhaust flow through the exhaust loop 29 ceases and the coolant led in the line portion 26a' no longer undergoes any warming in the heat exchanger 28.

The invention is in no way limited to the embodiment to which the drawing refers but may be varied freely within the scopes of the claims. The arrangement may also be used for keeping only one of said coolers 10, 15 substantially free from ice.

## Claims

1. An arrangement for a supercharged combustion engine (2), which arrangement comprises a first cooling system with a circulating coolant, a second cooling system with a circulating coolant which during normal operation of the combustion engine (2) is at a lower temperature than the coolant in the first cooling system, a cooler (10, 15) in which a gaseous medium which contains water vapour is intended to be cooled by the coolant in the second cooling system and a radiator element (24) where the circulating coolant in the second cooling system is intended to be cooled by air at the temperature of the surroundings, a heat exchanger (28) adapted to having coolant from the second cooling system flowing through it, and a valve means (30) which can be placed in a closed position whereby exhaust gases from the combustion engine are prevented from flowing through the heat exchanger (28), and an open position whereby exhaust gases from the combustion engine (2) flow through the heat exchanger (28) so that the coolant in the second cooling system is warmed by the exhaust gases, **characterised in that** the heat exchanger (28) is situated in the second cooling system at a location downstream of the radiator element (24) and upstream of the cooler (10, 15) with respect to the intended direction of coolant flow in the second cooling system and that the arrangement comprises at least one sensor (35) adapted to detecting a parameter which indicates whether the gaseous medium is cooled to such an extent that there is ice formation or risk of ice formation in the cooler (10, 15), and a control unit (31) adapted to receiving information from said sensor (35) and deciding whether there is ice formation or risk of ice formation in the cooler (10, 15) and, if so, to placing the valve means (30) in the open position.

2. An arrangement according to claim 1, **characterised in that** the arrangement comprises an exhaust loop (29) connected to an exhaust line (4) of the combustion engine (2) and that the exhaust loop (29) comprises said heat exchanger (28) and said valve means (30).

3. An arrangement according to claim 1 or 2, **characterised in that** said sensor is a temperature sensor (35) or a pressure sensor.

4. An arrangement according to any one of the foregoing claims, **characterised in that** the first cooling system is adapted to cooling the combustion engine (2).

5. An arrangement according to any one of the foregoing claims, **characterised in that** the arrangement comprises a further cooler (9, 14) in which the gaseous medium is intended to be subjected to a first stage of cooling by the coolant in the first cooling system before the gaseous medium is led to the aforesaid cooler (10, 15) in which it is subjected to a second step of cooling by the coolant in the second cooling system.

6. An arrangement according to any one of the foregoing claims, **characterised in that** said gaseous medium is compressed air which is led in an inlet line (8) to the combustion engine (2).

7. An arrangement according to any one of the foregoing claims, **characterised in that** said gaseous medium takes the form of recirculating exhaust gases which are led in a return line (11) to the combustion engine (2).

## Patentansprüche

1. Anordnung für einen aufgeladenen Verbrennungsmotor (2), wobei diese Anordnung aufweist: ein erstes Kühlsystem mit einem zirkulierenden Kühlmittel, ein zweites Kühlsystem mit einem zirkulierenden Kühlmittel, das während des Normalbetriebs des Verbrennungsmotors (2) eine niedrigere Temperatur hat als das Kühlmittel des ersten Kühlsystems, einen Kühler (10, 15), in dem ein wasserdampfhaltiges gasförmiges Medium vom Kühlmittel im zweiten Kühlsystem gekühlt werden soll, und ein Kühlerelement (24), in dem das zirkulierende Kühlmittel im zweiten Kühlsystem durch Luft mit Umgebungstemperatur gekühlt werden soll, einen Wärmetauscher (28), durch den Kühlmittel aus dem zweiten Kühlsystem strömt, und ein Ventilmittel (30), das in eine geschlossene Position gebracht werden kann, wodurch verhindert wird, dass Abgase aus dem Verbrennungsmotor durch den Wärmetauscher (28) strömen, und in eine offene Position, in der Abgase aus dem Verbrennungsmotor durch den Wärmetauscher (28) strömen, so dass das Kühlmittel im zweiten Kühlsystem durch die Abgase erwärmt wird, **dadurch gekennzeichnet, dass** sich der Wärmetauscher (28) im zweiten Kühlsystem an einem Ort stromabwärts des Kühlerelements (24) und stromaufwärts des Kühlers (10, 15) relativ zur vorgesehenen Strömungsrichtung des Kühlmittels im zweiten Kühlsystem befindet, und dass die Anordnung mindestens einen Sensor (35) aufweist, der eingerichtet ist, einen Parameter zu erfassen, der angibt, ob das gasförmige Medium so stark abgekühlt ist, dass Eisbildung oder die Gefahr von Eisbildung im Kühler (10, 15) besteht, und eine Steuereinheit (31), die zum Empfangen von Informationen von diesem Sensor (35) und zum Entscheiden eingerichtet ist, ob Eisbildung oder die Gefahr von Eisbildung im Kühler (10, 15) besteht, und falls ja, die das Ventilmittel (30) in die offene Position bringt.

2. Anordnung nach Anspruch 1, **dadurch gekennzeichnet, dass** die Anordnung einen mit einer Abgasleitung (4) des Verbrennungsmotors (2) verbundenen Abgaskreis (29) aufweist, und dass der Abgaskreis (29) den Wärmetauscher (28) und das Ventilmittel (30) enthält.

3. Anordnung nach Anspruch 1 oder 2, **dadurch gekennzeichnet, dass** der Sensor ein Temperatursensor (35) oder ein Drucksensor ist.

4. Anordnung nach einem der vorigen Ansprüche, **dadurch gekennzeichnet, dass** das erste Kühlsystem zum Kühlen des Verbrennungsmotors (2) eingerichtet ist.

5. Anordnung nach einem der vorigen Ansprüche, **dadurch gekennzeichnet, dass** die Anordnung einen weiteren Kühler (9, 14) aufweist, in dem das gasförmige Medium durch das Kühlmittel im ersten Kühlsystem eine erste Kühlstufe durchlaufen soll, bevor das gasförmige Medium in den oben genannten Kühler (10, 15) geleitet wird, wo es eine zweite Kühlstufe durch das Kühlmittel im zweiten Kühlsystem durchläuft.

6. Anordnung nach einem der vorigen Ansprüche, **dadurch gekennzeichnet, dass** das gasförmige Medium Druckluft ist, die zu einer Einlassleitung (8) des Verbrennungsmotors (2) geführt wird.

7. Anordnung nach einem der vorigen Ansprüche, **dadurch gekennzeichnet, dass** das gasförmige Medium zum Verbrennungsmotors (2) rückgeführte Abgase sind, die in einer Rücklaufleitung (11) zum Verbrennungsmotor (2) geleitet werden.

## Revendications

1. Dispositif pour un moteur à combustion suralimenté (2), ledit dispositif comprenant un premier système de refroidissement avec un agent de refroidissement en circulation, un second système de refroidissement avec un agent de refroidissement en circulation qui, pendant le fonctionnement normal du moteur à combustion (2), est à une température inférieure à celle de l'agent de refroidissement dans le premier système de refroidissement, un refroidisseur (10, 15) dans lequel il est prévu qu'un milieu gazeux contenant de la vapeur d'eau soit refroidi par l'agent de refroidissement dans le second système de refroidissement et un élément radiateur (24) où il est prévu que l'agent de refroidissement en circulation dans le second système de refroidissement soit refroidi par l'air à la température ambiante, un échangeur de chaleur (28) adapté pour que s'écoule à travers celui-ci l'agent de refroidissement du second système de refroidissement, et un moyen de soupape (30) pouvant être placé dans une position fermée dans laquelle les gaz d'échappement du moteur à combustion sont empêchés de s'écouler à travers l'échangeur de chaleur (28), et une position ouverte dans laquelle les gaz d'échappement du moteur à combustion (2) s'écoulent à travers l'échangeur de chaleur (28) de sorte que l'agent de refroidissement dans le second système de refroidissement est réchauffé par les gaz d'échappement, **caractérisé en ce que** l'échangeur de chaleur (28) est situé, dans le second système de refroidissement, en un point situé en aval de l'élément radiateur (24) et en amont du refroidisseur (10, 15) par rapport à la direction prévue de l'écoulement de l'agent de refroidissement dans le second système de refroidissement et **en ce que** le dispositif comprend au moins un capteur (35) adapté pour détecter un paramètre qui indique si le milieu gazeux est refroidi au point de provoquer la formation de glace ou un risque de formation de glace dans le refroidisseur (10, 15), et une unité de commande (31) adaptée pour recevoir des informations dudit capteur (35) et pour décider s'il y a formation de glace ou risque de formation de glace dans le refroidisseur (10, 15) et, si cela est le cas, pour placer le moyen de soupape (30) en position ouverte.

2. Dispositif selon la revendication 1, **caractérisé en ce que** le dispositif comprend une boucle d'échappement (29) reliée au conduit d'échappement (4) du moteur à combustion (2) et **en ce que** la boucle d'échappement (29) comprend ledit échangeur de chaleur (28) et ledit moyen de soupape (30).

3. Dispositif selon la revendication 1 ou 2, **caractérisé en ce que** ledit capteur est un capteur de température (35) ou un capteur de pression.

4. Dispositif selon l'une quelconque des revendications précédentes, **caractérisé en ce que** le premier système de refroidissement est adapté pour refroidir le moteur à combustion (2).

5. Dispositif selon l'une quelconque des revendications précédentes, **caractérisé en ce que** le système comprend un refroidisseur supplémentaire (9, 14) dans lequel il est prévu que le milieu gazeux soit soumis à une première étape de refroidissement par l'agent de refroidissement dans le premier système de refroidissement avant que le milieu gazeux ne soit acheminé au refroidisseur (10, 15) précité dans lequel il est soumis à une seconde étape de refroidissement par l'agent de refroidissement dans le second système de refroidissement.

6. Dispositif selon l'une quelconque des revendications précédentes, **caractérisé en ce que** ledit milieu gazeux est de l'air comprimé qui est conduit dans une ligne d'admission (8) au moteur à combustion (2).

7. Dispositif selon l'une quelconque des revendications précédentes, **caractérisé en ce que** le milieu gazeux prend la forme de gaz d'échappement en recirculation qui sont conduits dans une ligne de retour (11) au moteur à combustion (2).
